Europäisches Patentamt

European Patent Office

Office européen des brevets

(11) Numéro de publication: **0 091 997**
A1

(12) **DEMANDE DE BREVET EUROPEEN**

(21) Numéro de dépôt: 82200469.3

(22) Date de dépôt: 19.04.82

(51) Int. Cl.³: **G 01 N 21/53**, G 12 B 9/08

(43) Date de publication de la demande: 26.10.83
**Bulletin 83/43**

(84) Etats contractants désignés: **AT BE CH DE FR GB IT LI NL SE**

(71) Demandeur: **Rouet, Paul, 2 et 4 Avenue Meurée, B-6001 Marcinelle (BE)**

(72) Inventeur: **Rouet, Paul, 2 et 4 Avenue Meurée, B-6001 Marcinelle (BE)**

(74) Mandataire: **Bossard, Franz et al, ACEC - Service des Brevets Boîte Postale 4, B-6000 Charleroi (BE)**

(54) **Méthode et dispositif de mesure de la visibilité dans le brouillard.**

(57) Dans une méthode de mesure de la visibilité dans le brouillard au moyen d'un dispositif de mesure comprenant un appareil optiqué d'observation (2) orienté sur au moins un feu posé dans une aire de mesure et un écran exploré par un dispositif de détection sur lequel le dispositif optique (2) projete l'image du feu ou des feux, on dispose l'appareil optique (2) sur le sommet d'un mât (17) éventuellement rétractible de sa hauteur maximum jusqu'en dessous d'une hauteur de sécurité déterminée, on oriente l'appareil optique (2) sur au moins un feu dans une aire de mesure à terre, le sommet du mât (1, 7) se trouvant à la hauteur maximum, et on effectue la détection de l'image de ce feu par un dispositif de détection automatique rapide.

# METHODE ET DISPOSITIF DE MESURE DE LA VISIBILITE DANS LE BROUILLARD.

La présente invention a pour objet une méthode de mesure au moyen d'un dispositif de mesure de la visibilité dans le brouillard comprenant un dispositif optique d'observation orienté sur au moins un feu posé dans une aire de mesure et un écran exploré par un dispositif de détection sur lequel le dispositif optique projette l'image du feu ou des feux.

Le but de l'invention est de mesurer au moyen d'une méthode fiable et précise la visibilité dans le brouillard à au moins une distance limite prédéterminée. En particulier, l'invention a pour but la mesure de la visibilité oblique dans le brouillard telle que perçue par un pilote au moment de l'atterrissage. Actuellement, lors de l'atterrissage, le pilote s'approche du sol jusqu'à une hauteur d'environ 30 m, et si la visibilité est insuffisante, il redresse l'appareil pour ne pas attérrir et regagner la hauteur. De telles situations peuvent se présenter même lorsque la visibilité le long de la piste dépasse 100 m, car l'opacité des couches proches du sol peut être sensiblement plus faible que celle des couches supérieures.

L'invention permet de disposer de renseignements précis sur la visibilité lors de l'atterrissage pour avertir le pilote avant ou pendant son approche des conditions qu'il rencontrera au moment de l'atterrissage et d'éviter ainsi, éventuellement des manoeuvres dangereuses dans des conditions de visibilité insuffisantes.

La méthode de mesure de la visibilité dans le brouillard suivant l'invention est caractérisée en ce qu'on dispose l'appareil optique sur le sommet d'un mât, éventuellement rétractible de sa hauteur maximum jusqu'en dessous d'une hauteur de sécurité déterminée , en ce qu'on oriente l'appareil de manière fixe sur au moins un feu dans une aire de mesure en position du mât à hauteur maximum et en ce qu'on effectue la détection de l'image de ce feu par un dispositif de détection automatique rapide. Si le mât est rétractible, il est notamment prévu de rentrer le sommet du mât endessous d'une hauteur limite imposée au moment de l'atterrissage d'un avion.

Il est aussi possible d'intervertir l'appareil optique et le feu c'est-à-dire de monter un feu ou plusieurs feux sur un ou plusieurs mâts et de poser l'appareil optique à terre. L'expression "à terre" n'

62.07/1878.

exclut pas le montage sur un petit échafaudage ou poteau. Dans le cas d'un seul mât, cette solution est plus simple du point de vue mécanique, mais ne donne pas exactement le même résultat optique puisque la luminosité de l'arrière plan peut différer très fortement dans l'une et l'autre solution. Toutefois, puisque la luminosité de l'arrière plan est en général plus forte pendant la journée pour un feu placé en haut du mât que pour un feu à terre, la visibilité de feux en haut d'un mât n'est pas surestimée et donne donc une appréciation fiable de la visibilité oblique.

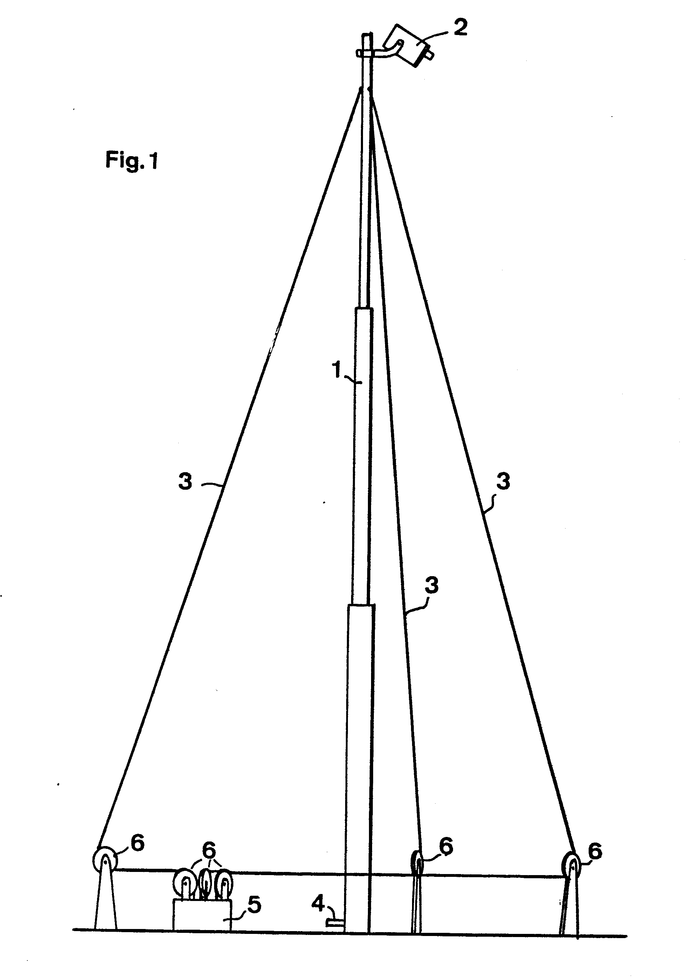

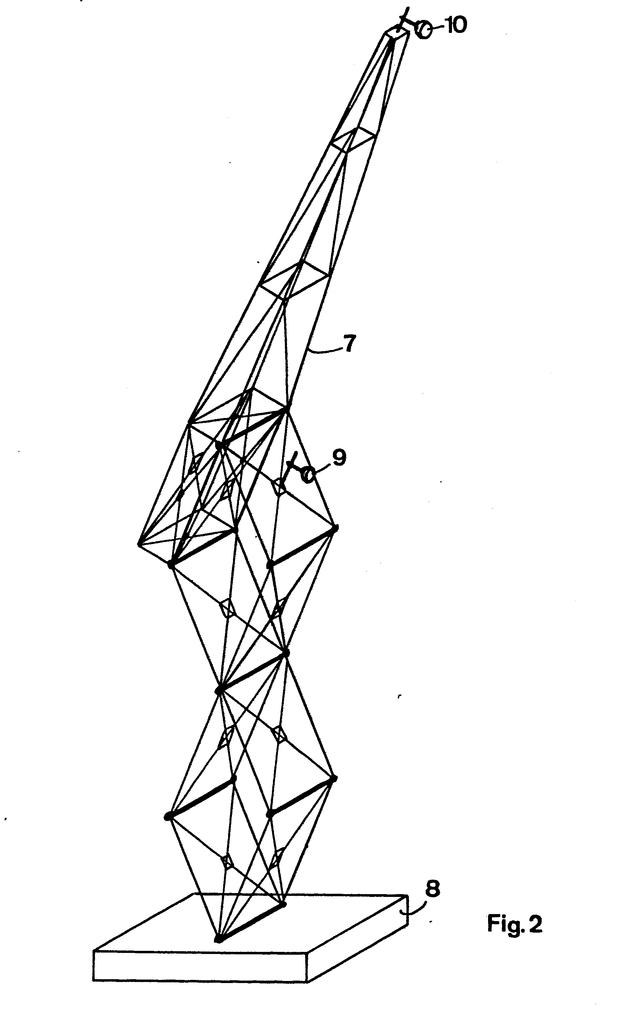

L'invention est décrite ci-dessous à l'aide d' exemples de formes d'exécution en se référant au dessin annexé. Les figures 1 et 2 sont des vues de mâts rétractibles.

Un mât rétractible 1 supporte sur son sommet un appareil optique 2 orienté de manière fixe sur un feu se trouvant à terre. Lorsque le mât 1 est sorti à sa hauteur maximum par exemple 20 à 50 m, le feu est visible par l'appareil optique 2 sous un angle prédéterminé environ égal à celui d'une trajectoire d'attérrissage d'un avion, à une distance égale environ à la distance limite de visibilité nécessaire pour permettre l'attérrisage en toute sécurité. Le mât 1 peut être un mât fixe, un mât télescopique simple ou selon la figure 1, un mât télescopique 1 haubanné, dont les haubans 2 sont rétractibles en même temps que le mât même. Le mât télescopique 1 peut être actionné par un fluide hydraulique ou pneumatique admis par une tuyauterie 4. Les haubans 3, en général trois, sont libérés par un tambour enrouleur 5 et passent ensuite sur des poulies de renvoi 6 pour maintenir immobile le sommet du mât, même en cas de vent fort.

Il est aussi possible d'envisager un mât pliable autour d'une articulation fixée à une certaine hauteur, ou suivant la figure 2, un mât pliable à la manière d'un pantographe 7 à un ou plusieurs parallelogrammes. Le dispositif d'actionnement du pantographe peut être un mécanisme entraîné par un moteur électrique ou un dispositif pneumatique ou hydraulique abrité dans un socle 8.

L'appareil optique 2 est de préférence à orientation fixe, mais un dispositif optique à orientation variable peut être prévu si plusieurs feux doivent être visés l'un après l'autre.

Afin d'alléger le mât, il est possible aussi de mettre l'appareil optique à terre et de faire porter par le mât seulement un ou plusieurs feux. Dans le cas où plusieurs feux 9,10, sont montés sur un mât, ces feux peuvent être placés à des hauteurs différentes et permettre ainsi d'observer la visibilité oblique sous plusieurs angles.

## REVENDICATIONS

1. Méthode de mesure de la visibilité dans le brouillard au moyen d'un dispositif de mesure de la visibilité dans le brouillard comprenant un appareil optique d'observation (2) orienté sur au moins un feu posé dans une aire de mesure et un écran exploré par un dispositif de détection sur lequel le dispositif optique (2) projette l'image du feu ou des feux,

caractérisée en ce qu'on dispose l'appareil optique (2) sur le sommet d'un mât (17) éventuellement rétractible de sa hauteur maximum jusqu'en dessous d'une hauteur de sécurité déterminée, en ce qu'on oriente l'appareil optique (2) sur au moins un feu dans une aire de mesure à terre,le sommet du mât (1,7) se trouvant à la hauteur maximum, et en ce qu'on effectue la détection de l'image de ce feu par un dispositif de détection automatique rapide.

2. Méthode suivant la revendication 1, caractérisée en ce qu'on intervertit les positions de l'appareil optique (2) et des feux , c'est à dire que des feux (9,10) sont fixés sur un mât et que l'appareil optique est installé à terre.

3. Méthode suivant une des revendications 1 ou 2, caractérisée en ce qu'on rentre le sommet du mât (1,7) en dessous d'une hauteur limite déterminée au moment de l'attérrissage d'un avion.

4. Méthode de mesure suivant la revendication 2, caractérisée en ce qu'on fixe plusieurs feux (9,10) sur le mât (7) à des hauteurs différentes.

5. Dispositif de mesure suivant l'une des revendications 1, 2 ou 3, caractérisé en ce que le mât (1) est un mât télescopique haubané.

6. Dispositif de mesure suivant l'une des revendications 1, 2 ou 3, caractérisé en ce que le mât est un mât en pantographe (7) à un ou plusieurs parallélogrammes.

7. Dispositif de mesure suivant l'une des revendications précédentes, caractérisé en ce que la hauteur maximum du mât (1,7) mesure entre 20 et 50 m.

1/2

0091997

Fig. 1

2/2

0091997

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 01 N 21/53 |
| X,Y | EP-A-0 017 393 (SECRETARY OF DEFENCE IN THE U.K. OF GB AND N.I.) *Figure 1, titre; page 9, ligne 22 - page 10, ligne 5* | 1,2,4, 7 | G 12 B 9/08 |
| | --- | | |
| Y | GB-A-1 559 821 (CIVIL AVIATION AUTHORITY) *Figure 3; page 2, lignes 93-130* | 1 | |
| | --- | | |
| Y | FR-A-2 409 499 (ASEA A.B.) *Figures 1,2,3,4; page 2, ligne 15 - page 5, ligne 3* | 1,2 | |
| | --- | | |
| X | US-A-3 693 015 (B.H.FUNK) *Figures 1,2A; colonne 2, lignes 10-40* | 1,2,4, 5 | |
| | | | **DOMAINES TECHNIQUES RECHERCHES (Int. Cl. ³)** |
| | --- | | |
| A | FR-A-1 136 186 (EXTINCTEURS "LE CHIMISTE" S.A.R.L.) *Figure 7; page 2, paragraphes 6-10; page 3, paragraph 1* | 5,6 | G 01 N G 01 W G 01 B G 12 B F 16 M |
| | ----- | | |

Le présent rapport de recherche a été établi pour toutes les revendications

| Lieu de la recherche LA HAYE | Date d'achèvement de la recherche 21-12-1982 | Examinateur VISSER F.P.C. |
|---|---|---|